(19) Europäisches Patentamt
European Patent Office
Office européen des brevets

(11) **EP 2 947 449 B1**

(12) **EUROPÄISCHE PATENTSCHRIFT**

(45) Veröffentlichungstag und Bekanntmachung des Hinweises auf die Patenterteilung:
**08.07.2020 Patentblatt 2020/28**

(51) Int Cl.:
***G01N 13/02*** *(2006.01)*

(21) Anmeldenummer: **15169209.2**

(22) Anmeldetag: **26.05.2015**

(54) **VERFAHREN UND VORRICHTUNG ZUR BESTIMMUNG EINER OBERFLÄCHENGÜTE**

METHOD AND DEVICE FOR DETERMINING SURFACE QUALITY

PROCEDE ET DISPOSITIF DESTINES A LA DETERMINATION D'UNE FINITION DE SURFACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.05.2014 DE 102014209862**

(43) Veröffentlichungstag der Anmeldung:
**25.11.2015 Patentblatt 2015/48**

(73) Patentinhaber: **Fraunhofer Gesellschaft zur Förderung der angewandten Forschung e.V.
80686 München (DE)**

(72) Erfinder:
• **Tornow, Christian
  28215 Bremen (DE)**
• **Brune, Kai
  28357 Bremen (DE)**
• **Noeske, Dr. Michael
  28213 Bremen (DE)**

(74) Vertreter: **Eisenführ Speiser
Patentanwälte Rechtsanwälte PartGmbB
Postfach 10 60 78
28060 Bremen (DE)**

(56) Entgegenhaltungen:
EP-B1- 1 893 974    DE-A1- 19 855 957
JP-A- 2005 083 754    US-A1- 2012 231 489

EP 2 947 449 B1

**Beschreibung**

Die vorliegende Erfindung betrifft ein Verfahren und eine Vorrichtung zur Bestimmung einer Oberflächengüte eines Substrats, sowie eine entsprechende Verwendung und ein entsprechendes Computerprogrammprodukt.

Ein bekanntes Verfahren zum Nachweis von Belägen auf Festkörperoberflächen ist die optisch stimulierte Elektronenemission (OSEE). Die resultierende Signalintensität beim Einsatz des OSEE-Verfahrens wird durch auf der Festkörperoberfläche insgesamt oder auf Oberflächenregionen aufliegende Beläge beeinflusst. Die zeitgleich erfasste Messfläche beträgt typischerweise etwa zwischen 100 mm$^2$ und 1 mm$^2$.

Weitere Informationen zu OSEE finden sich beispielsweise in US 5,393,980 und US 6,856,403 B1, sowie in den Artikeln M. Romand, F. Gaillard, M. Charbonnier, N. S. Prakash, L. Deshayes & I. Linossier (1995): Adhesion Science and Surface Analysis. Typical Examples, The Journal of Adhesion, 55:1-2, 1-16; Tennyson Smith "Surface Quality Unit For Inspection By☐Nondestructive Testing (SQUINT)", National SAMPE TECHNICAL CONFERENCE, Cincinnati, Fall 1983 und "Optically stimulated electron emission (OSEE): a non-invasive technique for contamination detection", Shlanger, S.; Epstein, G. Review of Progress in Quantitative Nondestructive Evaluation, La Jolla, California (United States), 15-20 Jul. 1990. Vol. 10 A, pp. 589-595. Edited by D.O. Thompson and D.E. Chimenti. Plenum Press (1991).

Eine bekannte Streulicht-basierte Rauheitsmessung wird typisch zur berührungslosen Untersuchung der Rauheit von Festkörperoberflächen eingesetzt.

Ein Verfahren und eine Vorrichtung zum Prüfen einer Oberflächengüte wird beispielsweise in EP 1 893 974 B1 (basierend auf WO 2006/131568 A1) beschrieben. Das dortige Vorgehen beruht auf optischen bildgebenden Messverfahren und umfasst mehrere Schritte, darunter

- Ermittlung der jeweiligen Fokusebene sowie einer geeigneten Licht-basierten Ausleuchtung der Analytoberfläche für das eingesetzte optische bildgebende Messverfahren mit dem Ziel, scharfe Kontraste unterschiedlicher Oberflächenbereiche der mit diesem bildgebenden Abbildungsverfahren zu untersuchenden Analytoberflächen zu erhalten, insbesondere nach Aufbringung eines Flüssigkeitsaerosols.
- Erstellen einer zweidimensionalen Abbildung der Analytoberfläche nach Aerosol-auftrag; somit umfasst die Abbildung, die zu einem Zeitpunkt erhalten wurde, an dem die Analytoberfläche und die Abbildungsoptik nicht relativ zueinander bewegt wurden und folglich kein Rastern zur Erzeugung eines Einzelbildes eingesetzt wurde, sowohl die mit Aerosol-Flüssigkeit bedeckten als auch die nicht mit Aerosol-Flüssigkeit bedeckten Analytoberflächenbereiche.
- Bildverarbeitende Auswertung der zweidimensionalen Abbildung mit dem Ziel, die mit Aerosol-Flüssigkeit bedeckten Analytoberflächenbereiche von den nicht mit Aerosol-Flüssigkeit bedeckten Analytoberflächenbereichen zu unterscheiden. Dazu werden Kontraste zwischen flächig ausgedehnten Bereichen genutzt und Umrisslinien flüssigkeitsbedeckter Analytoberflächenbereiche ermittelt.

Bekannt ist somit der Einsatz des Verfahrens Aerosol-Benetzungstest, wie in etwa EP 1 893 974 B1 beschrieben, zum Nachweis von Effekten von die Benetzung von Festkörperoberflächen beeinflussenden Belägen. Im Aerosol-Benetzungstest werden als Aerosol zerstäubte Prüfflüssigkeiten auf Festkörperoberflächen aufgebracht und die Größenverteilung der resultierenden Einzeltropfen in den resultierenden Tropfenmustern erfasst und ausgewertet. Bei glatten Substratoberflächen werden oft rundliche Umrisslinien flüssigkeitsbedeckter Analytoberflächenbereiche erhalten, bei rauhen Oberflächen auch nichtrundliche Umrisslinien. Die zeitgleich erfasste Messfläche beträgt etwa zwischen 10000 mm$^2$ und 1 mm$^2$, und es werden Einzeltropfen mit Größen zwischen 1 mm$^2$ und 0,001 mm$^2$ erfasst.

Gemäß EP 1 893 974 B1 erfolgt basierend auf erkannten geschlossenen Umrisslinien die Bestimmung der Einzeltropfengrößenverteilung dieser flüssigkeitsbedeckten Oberflächenbereiche, die Bewertung ist also auf die mit Aerosol-Flüssigkeit bedeckten Analytoberflächenbereiche konzentriert. Basierend auf dieser Bewertung werden dann über eine auf mehreren zehn bis auf mehreren tausend Einzeltropfen beruhende statistische Auswertung Oberflächenabdeckungscharakteristika und Oberflächenbenetzungscharakteristika wie die flächenbezogene Tropfenanzahldichte, die mittlere Tropfengröße oder Tropfengrößenverteilung ermittelt.

Wie sich anhand der obigen Beschreibung erkennen lässt, weist das aus EP 1 893 974 B1 bekannte Verfahren eine große Anzahl an Teilschritten auf, ist relativ empfindlich gegenüber einem Fehler in der Fokussierung der Abbildungsoptik und ist auf eine geeignete Ausleuchtung der Analytoberfläche angewiesen. Bei der Anwendung des Aerosol-Benetzungstests treten zudem technisch relevante erhebliche Beschränkungen auf, wenn die Einzeltropfenerfassung auf besonders reflektierenden, besonders rauen, besonders Licht absorbierenden oder besonders Licht streuenden Festkörperoberflächen erfolgen soll. Zudem beschränken die Voraussetzungen des Erkennens und der Erkennbarkeit einzelner Tropfen die verfahrenstypische, bei der Verfahrenssteuerung zum Beispiel über die über das flächenbezogen aufgebrachte Flüssigkeitsvolumen einzustellende Menge von Primärtröpfchen pro Analytoberflächenelement in der Weise, dass eine Perkolation infolge des flächendurchgängigen sich Berührens und Durchdringens benachbarter Oberflächentropfen nicht erwünscht ist, die verfahrenstypische Menge von Primärtröpfchen pro Analytoberflächenelement typischerweise also unterhalb der Perkolationsschwelle liegen wird.

In DE 198 55 957 A1 wird ein Verfahren zur Kontrolle der Hydrophilie einer festen Oberfläche nach einer hydrophilierenden Behandlung beschrieben, wobei man die Oberfläche mit Wasser benetzt, mit Infrarotstrahlung bestrahlt, die Intensität der von der Oberfläche zurückgestrahlten Infrarotstrahlung bei einer vorgegebenen Wellenlänge oder bei mehreren vorgegebenen Wellenlängen mißt und aus der gemessenen Intensität die mittlere Belegung der Oberfläche mit Wasser bestimmt.

Eine der vorliegenden Erfindung zugrunde liegende Aufgabe ist es, ein Verfahren und eine Vorrichtung zur Bestimmung einer Oberflächengüte bereitzustellen, bei dem die obigen Nachteile hinsichtlich Geschwindigkeit und Stör- bzw. Fehlerempfindlichkeit verringert sind.

Die Aufgabe wird gemäß einem ersten Aspekt der Erfindung durch ein Verfahren nach Anspruch 1 zur Bestimmung einer Oberflächengüte eines Substrats anhand seiner Benetzbarkeit gelöst.

Die Aufgabe wird gemäß einem zweiten Aspekt der Erfindung durch eine Vorrichtung nach Anspruch 6 zur Bestimmung einer Oberflächengüte eines Substrats anhand seiner Benetzbarkeit gelöst.

In der vorliegenden Anmeldung sind die Begriffe "Substratoberfläche" und "Analytoberfläche" als synonym zu verstehen, sofern sich aus dem Kontext nicht ergibt, dass der Begriff "Substratoberfläche" die nicht mit aufgebrachtem Medium bedeckte Festkörperoberfläche und der Begriff "Analytoberfläche" die während der Messung vorliegende Oberfläche meint.

Der Begriff "Signal" kann im Zusammenhang auch als "Signal-Antwort" verstanden werden, etwa wenn die Oberfläche in Reaktion auf eine Stimulation von außen eine entsprechende Antwort "ausgibt", die sich von derjenigen Antwort in vorbestimmbarer Weise unterscheidet, welche ohne diese Stimulation von außen erhalten wird.

In einer vorteilhaften Ausgestaltung des Verfahrens wird die Referenz bestimmt durch:

- Messen der von der lokalen Charakteristik des jeweiligen Bereichs der Oberfläche des Substrats abhängigen optisch stimulierten Elektronenemission vor Aufbringen des Mediums,
- Messen der von der lokalen Charakteristik eines jeweiligen Bereichs einer Oberfläche eines Vergleichssubstrats mit vorbestimmter Oberflächengüte abhängigen optisch stimulierten Elektronenemission vor und/oder nach einem entsprechenden Aufbringen eines Mediums auf die Oberfläche des Vergleichssubstrats, und/oder
- Verknüpfen eines vorbestimmten Teils oder der Gesamtheit der nach dem Aufbringen von Medium gemessenen optisch stimulierten Elektronenemissionen eines vorbestimmten Teils oder der Gesamtheit der zu prüfenden Oberfläche des Substrats mit einander.

Im Rahmen der Erfindung kann vor dem Aufbringen des Mediums das Signal gemessen werden, so dass durch einen Vergleich der Ergebnisse vor und nach dem Aufbringen des Mediums Rückschlüsse auf die Oberflächeneigenschaften geschlossen werden können.

Ebenso ist es möglich, anstelle oder zusätzlich zu einer Bildung der Referenz auf Basis des Substrats vor der Aufbringung des Mediums selbst eine oder mehrere entsprechende Messungen an einem Vergleichssubstrat vorzunehmen.

Es sei hier bemerkt, dass die Referenz auch durch theoretische Überlegungen oder eine Kombination etwa von Simulationen und Messungen gewonnen wird.

Es ist zudem möglich, dass die Gesamtheit (oder ein Teil davon) der Messergebnisse als Basis für die Bestimmung der Referenz genutzt wird. So kann beispielsweise eine Mittelung (insbesondere arithmetisches Mittel) der Messergebnisse vorgenommen werden, um auf diese Weise etwa Bereiche identifizieren zu können, die sich hinsichtlich ihrer Oberflächeneigenschaft von einem ansonsten möglicherweise sogar homogenen Umfeld abheben.

Ein besonderer Vorteil der Erfindung gegenüber Oberflächeneinzeltropfen-basierten Verfahren ist, dass die Erfindung auch mit Mengen von Primärtröpfchen pro Analytoberflächenelement umgesetzt werden kann, die oberhalb der Tropfenperkolationsschwelle liegen.

In einer vorteilhaften Ausgestaltung des Verfahrens umfasst das Messen:

- Messen wenigstens einer Bande eines Infrarot (IR-) spektrums der Oberfläche, und/oder
- Messen von an der Oberfläche gestreutem und/oder von der Oberfläche reflektiertem Licht.

Die hier genannten Messverfahren sind nur als beispielhaft zu verstehen, wobei die optisch stimulierte Elektronenemission und die Messung einer IR-Bande gemein haben, dass eine jeweilige Emission der Substrat- bzw. Analytoberfläche durch aufgelegtes Medium blockiert (d.h. absorbiert) oder zumindest abgeschwächt wird. Hinzukommt, dass diese Messverfahren vorteilhafterweise so genutzt werden können, dass entweder keine Emission vom Medium selbst oder keine in den Messbereich fallende Emission vom Medium selbst zu berücksichtigen sein müsste.

OSEE und IR unterscheiden sich dadurch, dass anders als bei OSEE bei IR auch gezielt eine Emission des Mediums selbst berücksichtigt werden kann. So ist es im Rahmen der Erfindung beispielsweise möglich, nicht (nur) eine (z.B. aus dem Vorhandensein von Carbonylgruppen, -C=O, resultierende) Bande des Substrats mittels IR zu messen, sondern (auch) die von der Benetzbarkeit abhängige Wassertropfen-bedeckte Fläche anhand einer O-H-Schwingungsbande des Wassers zu erfassen/messen.

Im Fall der Messung von Streulicht und/oder Reflektionen verhindert das aufgebrachte Medium einen (direkten) Einfall des Lichts auf die Oberfläche des Substrats und beeinflusst damit selbst die Messergebnisse. Zusätzlich kann naturgemäß auch eine Streuung und/oder Reflektion am aufgebrachten Medium erfolgen und die Messergebnisse beeinflussen.

In einer vorteilhaften Ausgestaltung ist Medium eine rückstandsfrei verdampfende Flüssigkeit oder eine Mischung aus mehreren rückstandsfrei verdampfenden Flüssigkeiten, insbesondere eine bei 23°°C und 50% relativer Luftfeuchte binnen weniger als 10 Minuten aus Tropfen mit einer Basisfläche von weniger als 100 mm$^2$ binnen weniger als 10 Minuten rückstandsfrei verdampfbare Flüssigkeit.

Das Medium ist vorzugsweise ausgewählt aus der Gruppe bestehend aus Wasser, Formamid, Ethern (z.B. Ethylenglykolmonoethylether oder Tetrahydrofuran), Ketonen (z.B. Aceton oder Methylethylketon), Alkoholen (insbesondere Methanol und Ethanol und Isopropanol) und Alkanen (insbesondere Hexan und Pentan) und Mischungen zweier oder mehrerer dieser Substanzen.

In einer vorteilhaften Ausgestaltung des Verfahrens umfasst das Aufbringen des Mediums ein Zerstäuben des Mediums mittels einer Ultraschalldüse.

Das Medium kann insbesondere in Form eines Sprühnebels mit üblichen Zerstäuberdüsen, insbesondere abgestimmt auf die jeweilige Prüfflüssigkeit, aufgebracht werden werden. Aerosole mit einer ausreichend schmalen Tropfengrössenverteilung liefern beispielsweise Zweistoffzerstäuberdüsen, die nach dem Druckprinzip arbeiten. Vorzugsweise wird der Sprühnebel erzeugt mit Hilfe eines Ultraschallzerstäubers. Ultraschallzerstäuber sind besonders geeignet zum Bilden feinster Prüfflüssigkeitströpfchen, insbesondere mit einem mittleren Primärtröpfchendurchmesser von 25 bis 100 $\mu$m. Neben einem Ultraschallzerstäuber ist zum Herstellen des Sprühnebels auch ein Zerstäuber zum Herstellen monodisperser Sprays bevorzugt, wie er beschrieben ist in E. K. Dabora, "Production of Monodisperse Sprays", Review of Scientific Instruments 1967, Vol. 38 Nr. 4, S. 502-506. Der Offenbarungsgehalt dieser Veröffentlichung wird hiermit zum Zwecke der Offenbarung der vorliegenden Erfindung vollständig in Bezug genommen. Dabei ist die Tropfengröße der Sprühnebel-Tropfen besonders einfach und genau einstellbar, die Größenverteilung der Tropfen des Sprühnebels ist praktisch monodispers.

Charakteristisch ist für erfindungsgemäße Verfahren, dass mindestens einer der möglicherweise mehreren Einsätze einer der möglicherweise mehreren Messeinheiten nach **Aufbringen** des Stimulus erfolgt. Bevorzugt ist, dass ein Einsatz einer Messeinheit während des **Einwirkens** des Stimulus (etwa während der Anwesenheit des Mediums auf der Oberfläche) erfolgt. Möglich ist, dass ein solcher Einsatz nach oder zusätzlich auch ergänzend nach dem **Einwirken** des Stimulus erfolgt (etwa nachdem das Medium wieder von der Oberfläche abgedampft ist).

In einer vorteilhaften Ausgestaltung des Verfahrens folgt das Aufbringen und Messen mehrfach aufeinander.

Bei einer mehrfachen Wiederholung des Aufbringens von Medium und des anschließenden Messens kann eine Entwicklung der zu prüfenden Oberflächeneigenschaft untersucht werden. In diesem Zusammenhang kann das Verfahren gezielt nichtzerstörungsfrei eingesetzt werden. In diesem Zusammenhang ist es insbesondere auch möglich, dass mit dem Medium eine oder mehrere weitere Substanzen (insbesondere Korrosionsagenten wie beispielsweise Salze, etwa NaCl oder KCl, oder Säuren oder Laugen) aufgebracht werden, die dann auf die Oberfläche einwirken, wobei die Wirkung nach einer vorbestimmten Zeit, z.B. nach Verdampfen des Mediums, durch erneute Messung festgestellt werden kann.

Für einen erfindungsgemäßen Stimulus ist charakteristisch, dass er auf die Substratoberfläche einwirkt und diese dergestalt beeinflusst, dass der einwirkende Stimulus die für die Untersuchung der Oberflächengüte relevante Charakteristik der Signalemission oder des Signalsignalzurückwerfens oder die Geometrie der Oberfläche vorübergehend oder anhaltend verändert. Ein erfindungsgemäßer Stimulus ist das Einwirken von kondensierten Partikeln mit einer Größe zwischen 1 $\mu$m und 1 mm auf eine Festkörperoberfläche. Dieses Einwirken erfolgt bevorzugt zerstörungsfrei, z. B. dergestalt, dass nach Einwirken des Stimulus die Substratoberfläche die gleichen für technische Prozesse relevanten Eigenschaften wie vor dem Einwirken des Stimulus aufweist. Gezielt kann auch ein nichtzerstörungsfreies Einwirken genutzt werden.

Die Erfindung betrifft insbesondere ein ein- oder mehrstufiges Messverfahren zum Nachweis von Effekten, die durch Beläge hervorgerufen werden, welche die Benetzung von Festkörperoberflächen beeinflussen. Das mehrstufige Messverfahren umfasst in einer Stufe das gezielte Aufbringen eines die zu untersuchende Festkörperoberfläche verändernden Stimulus, und es umfasst in einer, bevorzugt in zwei, besonders bevorzugt in genau zwei, weiterer Stufe(n) den Einsatz einer Messeinheit, bevorzugt zweier, besonders bevorzugt genau zweier, Messeinheiten, die zum Messen von Effekten durch die Benetzung von Festkörperoberflächen beeinflussende Beläge geeignet sind. Dabei erfolgt das gezielte Aufbringen eines die zu untersuchende Festkörperoberfläche verändernden Stimulus zeitlich getrennt vom Einsatz der Messeinheiten, die zum Nachweis von Effekten durch die Benetzung von Festkörperoberflächen beeinflussende Beläge geeignet sind. Dabei werden die Messeinheiten, die zum Nachweis von Effekten durch die Benetzung von Festkörperoberfläche beeinflussenden Belägen geeignet sind, zeitlich und örtlich in geeigneter Weise eingesetzt. Besonders geeignet ist ein zeitlich durch den Zeitraum des Aufbringens des Stimulus getrennter, wiederholter Einsatz **einer** Messeinheit in einer Oberflächenregion des Festkörpers. Geeignet ist auch ein zeitlich durch den Zeitraum des Aufbringens des Stimulus getrennter Einsatz zweier Messeinheiten in einer Oberflächenregion des Festkörpers. Geeignet ist auch der Einsatz zweier Messeinheiten ausschließlich nach Aufbringen des Stimulus.

Mit einem erfindungsgemäßen Messverfahren wird vorzugsweise ein einzelner gemessener Zahlenwert aus einer Messfläche zwischen 10000 mm$^2$ und 0,01mm$^2$ erhalten, besonders bevorzugt zwischen 100 mm$^2$ und 0,1mm$^2$. Vorteilhaft bei einer Anwendung des erfindungsgemäßen Verfahrens in einem Fertigungsprozess ist, dass charakteristische Messergebnisse von Festkörperoberflächen mit einander in Beziehung gesetzt werden, die ohne beziehungsweise mit Einwirkung des die Oberfläche verändernden Stimulus auf die zu untersuchende Oberfläche eines Analyten erhalten wurden. Geeignet ist auch ein Vergleich von Messergebnissen mit Messergebnissen, die bei der Messung einer Referenz erhalten wurden. Geeignet ist der Vergleich von Messergebnissen, die nach Stimuluseinwirkung erzielt wurden, mit Messergebnissen, die vor Stimuluseinwirkung erhalten wurden.

Besonders vorteilhaft ist es im Rahmen des erfindungsgemäßen Verfahrens möglich, dass Messergebnisse vor Einwirkung des die Oberfläche beeinflussenden, also vorübergehend oder anhaltend verändernden, Stimulus und Messergebnisse nach Einwirkung des die Oberfläche beeinflussenden Stimulus mit Hilfe eines Auswertealgorithmus in Beziehung gesetzt werden, nach dessen Anwendung eine zweidimensionale Übersicht über regionale Benetzbarkeitsunterschiede resultiert, ohne dass im Rahmen des erfindungsgemäßen mehrstufigen Messverfahrens Einzeltropfen als Effekt des die Oberfläche beeinflussenden Stimulus erfasst werden müssen.

Der Erfindung liegen unter anderen / insbesondere die folgenden Überlegungen und Erkenntnisse zugrunde: Das Aufbringen des Benetzungs-sensitiven Stimulus erlaubt insbesondere, Messeinheiten, deren Messsignale ohne das Aufbringen des Stimulus nicht unmittelbar von der Oberflächenbenetzbarkeit bestimmt sind, zu Untersuchungen der Benetzbarkeit einzusetzen.

Eine herkömmliche OSEE-Messung ist beispielsweise sensitiv auf die Anwesenheit und Schichtdicke von Belägen, eine herkömmliche IR-Messung ist beispielsweise sensitiv auf die Anwesenheit von Belägen in im Vergleich zu OSEE größerer Schichtdicke, während eine herkömmliche Messung mit einem Rauheitssensor sensitiv auf Rauheiten ist. OSEE- und Rauheitsmessungen sind hier und durchweg in der Anmeldung beispielhaft für andere Verfahren genannt.

Die Erfindung erlaubt ein Erkennen inhomogener Oberflächen-Benetzbarkeit(en), namentlich lateraler, also in Richtung(en) parallel zur Analyt-Oberfläche verlaufender Inhomogenitäten:
Liegen laterale Inhomogenitäten der Benetzbarkeit innerhalb eines untersuchten Analytoberflächenabschnitts $A_0$ (von typischerweise 1 mm bis 10 cm Breite) vor, so führen diese innerhalb einer Aufnahme (wenn das Verfahren "Aufnahmen" macht; man könnte in Anlehnung an eine englischsprachige Ausdrucksweise auch sagen "Maps", "Mapping-Ergebnisse", wenn ein Messsignal in Abhängigkeit vom Ort auf der Oberfläche dargestellt wird, z.B. falschfarben-codiert) zu Messsignal-Unterschieden.

Nachfolgend wird ein beispielhaftes erfindungsgemäßes Computerprogrammprodukt hinsichtlich seiner Mess-, Auswerte- und Dokumentationsoptionen eingehender beschrieben.

Bei einem vom Computerprogrammprodukt unterstützten Messvorgang wird der Ort der Messfläche relativ zur zu untersuchenden Oberfläche verändert, was typisch zeilenweise rasternd erfolgt. Für jeden Ort der Messfläche werden dessen Ortskoordinaten sowie die mit der Messeinheit gemessenen Signale aufgezeichnet. Die mehrdimensionale Darstellung der mit der Messeinheit gemessenen Signale in Abhängigkeit von den Ortskoordinaten ergibt eine Aufnahme, nachfolgend Messsignal-Map genannt, das in einer Datenbank zur Dokumentation hinterlegt wird.

Eine vom Computerprogrammprodukt unterstützte Auswerteoptionen ist auf die Aufgaben im Rahmen einer Oberflächen-Qualitätssicherung abgestimmt. Nach Eingabe eines Passworts kann ein entsprechend berechtigter Ingenieur in der Software Schwellwerte setzen, mit denen die mittels der Messeinheit gemessenen Signale verglichen werden. In der Praxis werden an geeigneten Referenz-Oberflächen Referenz-Messwerte ermittelt und Schwellwerte werden dann zum Beispiel über innerhalb der Prozessführung, deren Qualität zu sichern ist, tolerierbare prozentuale Abweichungen vom Referenzwert definiert. Liegt ein Messwert innerhalb des Intervalls zwischen unterem und oberem Schwellwert, so kann der Messwert in der Software als "in Ordnung" eingestuft und in eine grüne Farbe zur Falschfarb-Kodierung umgesetzt werden. Liegt ein Messwert außerhalb des Intervalls zwischen unterem und oberem Schwellwert, so kann der Messwert in der Software als "nicht in Ordnung" eingestuft und in eine rote Farbe zur Falschfarb-Kodierung umgesetzt werden. Die mehrdimensionale Darstellung der solchermaßen bewerteten gemessenen Signale in Abhängigkeit von den Ortskoordinaten ergibt ein Abweichungs-Map.

Nach Eingabe eines Passworts kann ein entsprechend berechtigter Ingenieur in der Software Kriterien festlegen, nach denen die Abweichungs-Maps ausgewertet und letztlich die Qualität der gesamten untersuchten Oberfläche eingestuft wird. Einige der Kriterien, die zur Verfügung stehen, sind der Anteil "nicht in Ordnung" bewerteter Messregionen an der untersuchten Fläche oder die Anzahl mehrerer benachbarter "nicht in Ordnung" bewerteter Messregionen (Hierbei sei darauf hingewiesen, dass ein einzelner abweichender Messwert insbesondere dann auffällig wird, wenn auch in benachbarten Bereichen abweichende Messwerte erhalten werden). Schließlich kann auf Basis dieser von einem entsprechend berechtigten Ingenieur in der Software festgelegten Kriterien eine gesamte Fläche, z.B. die Oberfläche eines Bauteils, mittels eines logischen Ampelkriteriums als "nicht in Ordnung" oder "in Ordnung" kategorisiert werden und dem Werker, der die Hardware des Messverfahrens bedient, eine rote oder grüne Ampel angezeigt werden.

Die entsprechenden Messwerte-Maps, Abweichungs-Maps sowie Ampel-Ausgaben werden in Datenbanksystemen zur Dokumentation gespeichert.

Weitere Optionen zur Steuerung der Hardware bietet das Computerprogramm z.B. für die Einstellung der Aufsprühbedingungen (Aufsprühzeit; Medienfluss), die Festlegung des Zeitunterschiedes zwischen dem Aufsprühen und dem ersten Einsatz der Messeinheit, oder für den optional mehrmaligen Einsatz der Messeinheit zur Aufnahme der zeitabhängigen Medienabtrocknung.

Die Bewertung der Messignal-Maps erfolgt mithilfe des Computerprogramms unter Berücksichtigung der Charakteristika der jeweils eingesetzten Messeinheit.

Eine weitere vom Computerprogrammprodukt unterstützte Auswerteoptionen ist auf die Aufgaben im Rahmen einer Benetzbarkeitsmessung abgestimmt, die unter Bezugnahme auf Kalibrierungen (z.B. unter Einsatz anderer Verfahren, z.B. einer Goniometer-basierten Kontaktwinkelmessung; z.B. durch Einsatz des erfindungsgemäßen Verfahrens an Oberflächenstandards) oder auf Modellbildungen die Ermittlung von Kontaktwinkeln und, bei Kenntnis der Oberflächenenergie des eingesetzten Mediums darauf basierend, von Substrat-Oberflächenenergien ermöglicht.

Durch Ermittlung eines (lateral-lokal unterschiedlichen) Benetzungsverhaltens kann mit der Erfindung der (lateral-lokal unterschiedliche) Kontaktwinkel ermittelt werden.

Benetzungsbedingte Kontaktwinkel sind eine in der Oberflächenprozesstechnik gängige Kenngröße zur Beurteilung von Oberflächenzuständen. Eine Übertragung der Messsignale oder Messignal-Maps eines erfindungsgemäßen Verfahrens auf diese Kenngröße ist technologisch also sehr relevant. Zudem gibt die Modell-basierte Rechnung dem Benutzer die Möglichkeit zur Hand, schnell die Messbedingungen des erfindungsgemäßen Verfahrens auf Basis von Vorexperimenten zu optimieren. Ein solches Vorexperiment kann die Ermittlung der Oberflächenenergie eines Bauteils mittels einer Testtinte sein. Auf Basis eines solchen Vorexperiments und einer Modell-basierten Schar von Master-Kurven kann der Benutzer dann die Hardware des erfindungsgemäßen Verfahrens schnell zielführend ansteuern. Dazu sind Modell-basierte Scharen von Master-Kurven im Computerprogramm hinterlegt. Eine Kurve einer solchen Schar unterscheidet sich von einer anderen Kurve einer solchen Schar zum Beispiel durch den der Modellbildung zugrunde gelegten Kontaktwinkel des eingesetzten Mediums. Eine Masterkurve gibt z.B. den Anteil freier, nicht Medium-bedeckter Substratoberfläche in Abhängigkeit von der Menge (angegeben als Flächenkonzentration, z.B. mL Medium pro $cm^2$) des aufgesprühten Mediums an.

Diese Übertragung wird anhand einer Modellbildung auf Basis von Messsignalen oder Messsignal-Maps ermöglicht, die mit einem systematisch geplanten erfindungsgemäßen Verfahren erhalten werden.

Ein Beispiel einer solchen Modellbildung ist nachfolgend für Substratoberflächenbedeckungen von maximal 80% mit aus einem Aerosol-basierten Medium-Auftrag stammender Flüssigkeit als einwirkendem Stimulus ausgeführt: Die Planung und Auswertung von Experimenten zur Kontaktwinkelbestimmung erfolgt im Falle der auf der Substratoberfläche aus den aufgebrachten Primärtröpfchen resultierenden Sekundärtröpfchenbildung auf ideal glatten, (lateral) homogenen (homogen benetzbaren) Analytoberflächenabschnitten wie folgt, wenn man annimmt, dass ein Sekundärtropfenwachstum ausschließlich bei einer Kollision eines Primär- und eines Sekundärtröpfchens erfolgt, dass also zwei Sekundärtröpfchen bei vereinfachter Betrachtung nicht mit merklicher Wahrscheinlichkeit zu einem größeren Sekundärtröpfchen koaleszieren können. Diese Annahme scheint am wahrscheinlichsten bei Substratoberflächenbedeckungen von weniger als 80% mit aus dem Aerosol-Auftrag stammender Flüssigkeit gerechtfertigt zu sein.

1. Schritt der Modellbildung: Primärtropfenauftrag:

Flüssigkeitstropfen mit einem Primärtropfendurchmesser DP werden erzeugt, die ein Volumen von VP=4/3 * $\pi$ * $(DP/2)^3$ aufweisen. Wie oben ausgeführt, lassen sich mit bekannten Ultraschalldüsen Primärtröpfchendurchmesser zwischen etwa 25 $\mu$m und 100 $\mu$m erzielen, die zudem enge ("monodisperse") Primärtröpfchendurchmesser-Verteilungen aufweisen.

2. Schritt der Modellbildung: Sekundärtropfenbildung:

Auf ideal glatten, (lateral) homogenen (homogen benetzbaren) AnalytoberflächenAbschnitten bilden sich dann Sekundärtröpfchen, die bei hinlänglich geringen Oberflächenbelegungen Einzeltröpfchen bleiben, das Volumen VS = VP aufweisen, und die einen Durchmesser (in der Projektion auf die Analytoberfläche) DS und somit eine (Basis-) Fläche von

$$A_{Tropfen} = \pi * (DS/2)^2$$

haben.

Eine Berechnung von DS sowie $A_{Tropfen}$ erfolgt ausgehend von VP mithilfe der Formeln in den Absätzen [0042] und [0043] in EP 1 893 974 B1, wenn V und D in aus EP 1 893 974 B1 mit VP und DS gleichgesetzt werden (und die Basisfläche proportional zu $D^2$ bei gegebenem Kontaktwinkel berechnet wird).

Befindet sich die Tropfenzahl $N_0$ von gleich großen Sekundärtröpfchen, die jeweils eine Fläche $A_{Tropfen}$ bedecken, auf dem Analytoberflächenabschnitt $A_0$, so ist die Fläche $A_{abgedeckt} = N_0 * A_{Tropfen}$ von Tröpfchen abgedeckt und somit die unbedeckte Fläche

$$A_{unbedeckt} = A_0 - A_{abgedeckt} = A_0 * (1 - A_{(abgedeckt)}/A_0) = A_0 * (1 - BK)$$

somit frei.

Der Bedeckungskoeffizient $BK = A_{abgedeckt}/A_0$ gibt an, wie groß der von Sekundärtröpfchen bedeckte Analytoberflächenabschnitt ist.

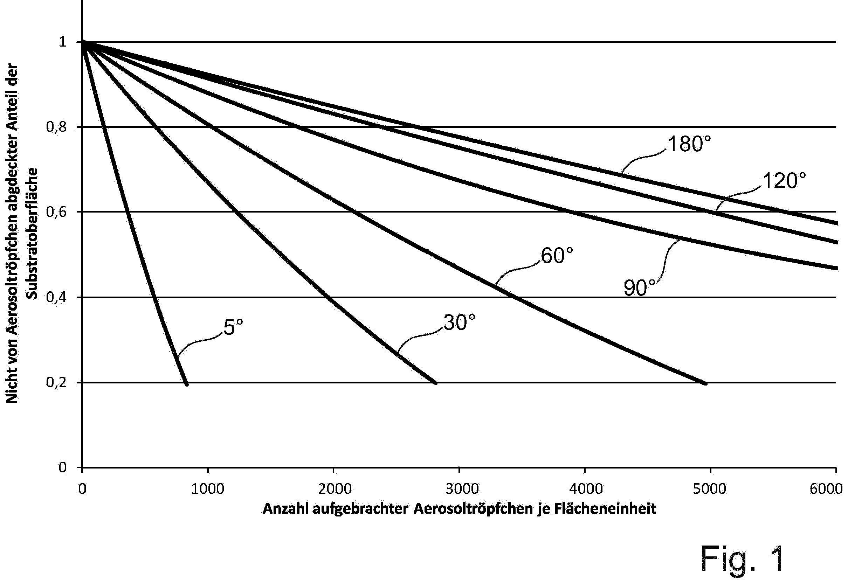

Basierend auf einem solchen einfachen Modell, das die Sekundärtröpfchenbildung auf homogenen Substraten betrachtet und das zusätzlich noch ausschließlich ein solches Sekundärtropfenwachstum berücksichtigt, welches aus einer Kollision eines Primär- und eines Sekundärtröpfchens resultiert (angenommen wird in diesem vereinfachenden Modell also, dass zwei Sekundärtröpfchen nicht merklich zu einem größeren Sekundärtröpfchen koaleszieren können), ergibt sich folgender, in Fig. 1 schematisch dargestellter Zusammenhang zwischen der nicht von Sekundärtröpfchen bedeckten Substratoberfläche, im Modell also

$$A_{unbedeckt} = A_0 * (1 - BK),$$

und der aufgebrachten Primärtropfenmenge, betrachtet für unterschiedliche, jeweils flächeneinheitliche Kontaktwinkel von 180°, 120°, 90°, 60°, 30° bzw. 5°.

Die vorliegende Erfindung nutzt insbesondere die zwei im Folgenden erläuterten Typen von Mess- bzw. Prüfverfahren (sowie die entsprechenden Vorrichtungen) I und II.

I) Messverfahren, deren Signale wesentlich von der lateralen (also in Richtung parallel zur Substratoberfläche verlaufenden) Ausdehnung der aufs Substrat aufgebrachten Tröpfchen beeinflusst sind. Dazu zählen Messverfahren, die im Wesentlichen Substratbedingte Signalintensitäten erfassen (In EP 1 893 974 B1 werden im Übrigen Intensitäten beim Benetzungstest nicht (mit einem genauen Zahlenwert, der Messverfahrens-prägend ist) erfasst, vielmehr werden dort Kontraste erfasst), welche entsprechend der von der auf die Substratoberfläche projizierten Fläche der auf dem Substrat aufliegenden Flüssigkeitströpfchen deutlich (das heißt schon bei einem angenommenen/gedachten Flüssigkeitsfilm, dessen Höhe beispielsweise einem Prozent des überwiegend vorliegenden Tropfendurchmessers oder des Primärtröpfchendurchmessers entspricht, signifikant messbar) abgeschwächt werden.

Die hier diskutierten Messverfahren (z.B. OSEE, IR-Spektroskopie oder auch andere) sind insbesondere so oberflächenempfindlich, dass (im Falle des Einsatzes von Wasser als Medium) aufliegendes Wasser die Signal-Sonden-Emission lokal um mindestens eine Größenordnung verringert , wobei die Signale vorzugsweise eindeutig bzw. sicher aus dem Substrat und nicht aus der aufgesprühten Flüssigkeit stammen (Z.B. emittieren elektrisch isolierende Wassertröpfchen im Kontext von OSEE nicht lange messbar Elektronen, weil die Tröpfchen sich elektrisch positiv aufladen. Z. B. emittieren Wassertröpfchen im Unterschied zu Amidgruppen oder Estergruppen in Polyamid- oder Polyester-Substraten keine IR-Strahlung im Bereich um etwa 1700 cm$^{-1}$, weshalb aus Carbonylgruppen resultierende C=O-Schwingungsbanden Substrat- und nicht Wasserspezifisch sind).

Die bei Messverfahrensart I) gemessenen Signalintensitäten verhalten sich entsprechend dem "nicht von Aerosoltröpfchen abgedeckten Anteil der Substratoberfläche" (siehe Fig. 1), wenn die auf eine Substratoberfläche aufgebrachte Wassermenge verändert wird oder unterschiedliche Kontaktwinkel zwischen Wassertropfen und Substratoberfläche vorliegen.

Hierbei werden oberflächenempfindliche Messsonden eingesetzt, für die praktisch ausschließlich die nicht mit aus dem Aerosol stammender Flüssigkeit bedeckte Substratoberfläche erfassbar ist. Diese Erfassbarkeit kann daraus resultieren, dass oberflächenempfindliche Messsonden eingesetzt werden, die die Oberfläche erreichen sollen, oder daraus resultieren, dass oberflächenempfindliche Messsonden eingesetzt werden, die die Substratoberfläche verlassen können. Für erfindungsgemäße Verfahren charakteristisch, wird die Signalintensität schon bei sehr dünnen Schichten der Aerosol-Flüssigkeit auf dem Substrat signifikant messbar (, weil ein Effekt von typischerweise mindestens 5% (relativ) der Signalintensität erzielt wird) abgeschwächt. Hierbei ist ein sehr dünner Film so charakterisiert, dass seine Höhe im Falle eines angenommenen/gedachten geschlossenen Films einem Prozent des überwiegend vorliegenden Tropfendurchmessers entspricht. Ein mehr als ein Prozent des überwiegend vorliegenden Tropfendurchmessers dicker Film wäre entsprechend mindestens ebenso effektiv für die Signalintensität. Sind beispielsweise 70% der Substratoberfläche nicht von Aerosoltröpfchen abgedeckt, so wird im Vergleich zu einer gar nicht mit Aerosoltröpfchen belegten Substratoberfläche ein auf 70% (und somit signifikant messbar um 30%) reduziertes, substratbedingtes Signal gemessen.

Hierbei kann zur Vereinfachung zunächst angenommen werden, dass alle aus der unbedeckten Fläche $A_{unbedeckt}$ austretenden, Signal-beitragenden Sonden wie z.B. Photoelektronen bei OSEE oder IR-Quanten/Strahlung bei IR-spektroskopischem Auslesen zum Messsignal beitragen können. Eine weitere Näherung besteht darin, dass alle aus der bedeckten Fläche $A_{bedeckt}$ austretenden, Signal-beitragenden Sonden wie z.B. Photoelektronen bei OSEE oder IR-Quanten bei IR-spektroskopischem Auslesen nicht zum Messsignal beitragen können, weil sie die Flüssigkeit im Tröpfchen schon bei geringster Flüssigkeitsdicke nicht durchdringen können.

Damit kann man mit einem Bedeckungskoeffizienten BK = $A_{abgedeckt}$ / $A_0$ eine flächenproportionale Signalintensität S, die proportional zur unbedeckten, emittierenden Fläche erhalten wird, gemäß

$$S = S_{unbedeckt} = SEK * A_{unbedeckt} = SEK * A_0 * (1 - BK)$$

in guter Näherung bestimmen, wobei SEK ein Substrat-spezifischer Proporionalitätsfaktor, hier (Sonden-Signal-) Emissionskoeffizient genannt, ist und am unbedeckten Substrats ermittelt werden kann.

Bezogen auf die analysierte Fläche $A_0$, ergibt sich schließlich für ein von einem erfindungsgemäßen Verfahren in einer Analytoberflächenregion gemessenes flächenbezogenes Signal:

$$S/A_0 = SEK * (1 - BK)$$

Ersichtlicherweise wäre zur Ermittlung von SEK in einer ersten Verfahrensstufe eine Messung der unbedeckten Substratoberfläche (also: BK = 0) erforderlich. Diese Messung kann aber auch an einem Referenzsubstrat erfolgen. Es ist zudem möglich, in Modifikation der obigen Überlegungen lediglich nach Abweichungen der Signalintensität während der Untersuchung einer Substratoberfläche zu suchen, wobei dann beispielsweise der Mittelwert als Referenz angenommen würde.

SEK-Werte hängen von der Bestückung der Messeinheit ab. Bei Einsatz von OSEE als Messverfahren ist z. B. der Faktor SEK wesentlich stärker vom Abstand zwischen Oberfläche und Messeinheit abhängig als bei einem IR-basierten Messverfahren.

Im Falle der Nutzung bzw. des Auftretens einer Tropfenkoaleszenz mit Sekundärtröpfchen hängen $A_{Tropfen}$ und auch die flächenbezogene Tropfenanzahldichte bei vorgegebenem aufgetropftem Wasservolumen vom Kontaktwinkel eines Tröpfchens ab.

Ein erfindungsgemäßes Messverfahren erreicht eine besondere Empfindlichkeit (vgl. Fig. 1)

i) bei geringen Kontaktwinkeln und (wie z.B. eine Flächenhaftungs-fördernde Substrat-Oberflächenvorbehandlung, z.B. für eine Vorbehandlung innerhalb eines Klebprozesses, erwünscht) guten Substrat-Benetzbarkeiten,

ii) oder bei höheren Kontaktwinkeln im Falle der Wahl eines erhöhten Wasser-Gesamtvolumens je Einheitsfläche, wenn diejenige aufgebrachte Wassermenge ermittelt wird, die (noch) unterhalb des zur Bildung eines geschlossenen Films erforderlichen Wasser-Gesamtvolumens liegen soll.

Mit EP 1893974 B1 ist eine solche Experimentführung nicht möglich, weil bei sehr flachen und ausgedehnten Tropfen oder oberhalb der Tropfen-Perkolationsschwelle praktisch keine Einzeltropfenerkennung möglich ist.

Zur Betrachtung zu i) und ii) im Detail:

Im Rahmen der Erfindung wurde erkannt, dass - falls die Substratsignalintenstität mit etwa 5% (relativem) Fehler gemessen wird - dann der Unterschied zwischen einer 90%-igen und einer 95%-igen Substratoberflächenbedeckung mit Tropfen gut differenziert werden kann, wenn im Vergleich zum nicht bedeckten Substrat (100% -90% =) 10% oder (100% -95% =) 5% Signalintensität als aus der freien Oberfläche emittiertes Rest-Signal gemessen werden, also ein Unterschied von einem Faktor zwei beim Rest-Signal erhalten wird, während etwa der Unterschied zwischen einer 10%-igen und einer 5%-igen Substratbedeckung mit Tropfen praktisch kaum signifikant differenziert werden kann, wenn (100% - 5% =) 95% oder (100% - 10% =) 90% Rest-Signal gemessen werden.

II) Messverfahren, deren Signale wesentlich von der vertikalen (also in Richtung senkrecht zur Substratoberfläche verlaufenden) Ausdehnung der aufs Substrat aufgebrachten Tröpfchen beeinflusst sind. Dazu zählen Messverfahren, die auf die geometrische Oberflächencharakteristik der substratbedeckenden Tröpfchen sowie auf die geometrische Oberflächencharakteristik des unbedeckten Substrats empfindlich sind.

Dazu gehören z.B. Streulicht-basierte Messverfahren, bei denen diese Empfindlichkeit aus der Änderung des Lichtstreuverhaltens des besprühten Substrates im Vergleich zum unbesprühten Substrat resultiert. Für das nach Besprühen geänderte Streuverhalten des Substrats sind die Flankensteilheit der Tröpfchen, die Ausrichtung der Tröpfchenflanken im Vergleich zum eintreffenden Lichtstrahl und die Flächendichte (also Tropfenanzahl pro Einheitsfläche) der Tröpfchen ausschlaggebend, wobei primär die Abschwächung von für die unbedeckte Substratoberfläche charakteristischen Streulichtbeiträgen betrachtet wird und darauf folgend die im Vergleich zur unbedeckten Substratoberfläche zusätzlichen Streulichtsignalbeiträge. Sowohl die Flankensteilheit der Tröpfchen als ihre Flächendichte hängen von der Tropfengrößenverteilung und somit vom vorliegenden Kontaktwinkel ab, die Ausrichtung der Tröpfchenflanken im Vergleich zum eintreffenden Lichtstrahl wird durch die Oberflächentopographie des Substrats beeinflusst.

Es hier bemerkt, dass vertikale Dimensionen (der Tropfen bzw. Tropfengrößen) beim Benetzungstest gemäß EP 1 893 974 B1 nicht erfasst werden, vielmehr werden dort laterale Kontraste erfasst und als Tropfenausdehnungen interpretiert bzw. gewertet.

Im Folgenden wird die Erfindung mit Bezug auf die beiliegenden Figuren weiter erläutert. Hierbei zeigt:

Fig. 1     ein Diagramm, das vereinfacht einen Bezug zwischen der Anzahl aufgebrachter Aerosoltröpfchen je Flächeneinheit und dem nicht von Aerosoltröpfchen abgedeckten Anteil der Substratoberfläche für verschiedene Kontaktwinkel zeigt,

Fig. 2     ein schematisches Ablaufdiagramm eines erfindungsgemäßen Verfahrens und

Fig. 3     eine schematische Darstellung einer erfindungsgemäßen Vorrichtung.

Fig.1 zeigt einen schematisch dargestellten rechnerischer Zusammenhang auf Basis eines grob vereinfachten Modells, der die Abhängigkeit der nicht von Sekundärtröpfchen bedeckten Substratoberfläche von der aufgebrachten Aerosol-Primärtropfenmenge betrachtet für unterschiedliche, jeweils flächeneinheitlich angenommene Kontaktwinkel von 180°, 120°, 90°, 60°, 30° bzw. 5° zwischen Sekundärtröpfchen und Substratoberfläche.

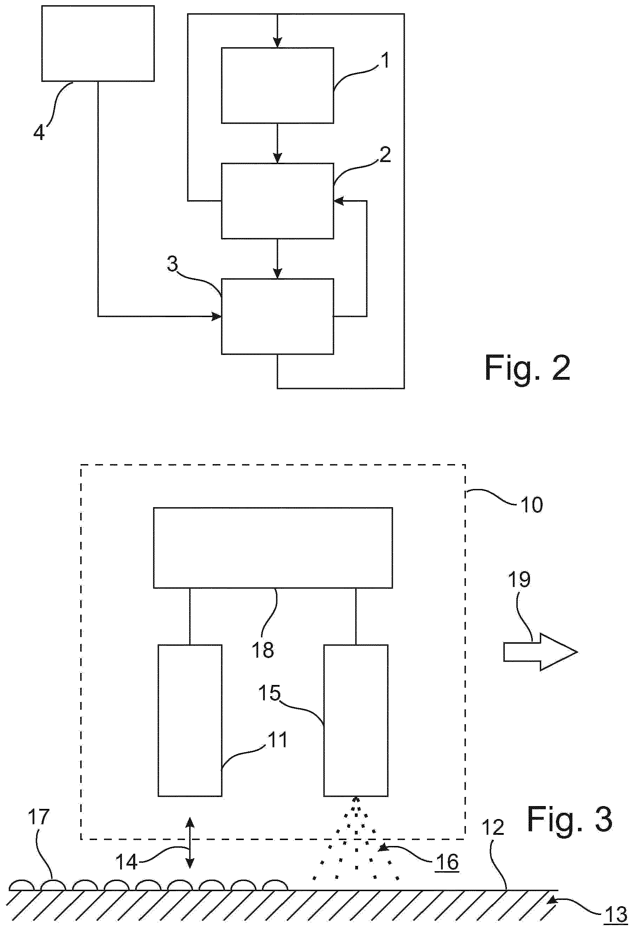

Fig. 2 zeigt ein schematisches Ablaufdiagramm eines erfindungsgemäßen Verfahrens.

In Schritt 1 erfolgt ein Aufbringen eines Mediums auf eine Oberfläche des Substrats, so dass der jeweilige Bereich teilweise bedeckt wird und durch das Medium eine Emission eines von einer lokalen Charakteristik eines jeweiligen Bereichs der Oberfläche des Substrats abhängigen Signals von der Oberfläche oder eine von der lokalen Charakteristik des jeweiligen Bereichs der Oberfläche des Substrats abhängige Reflektion eines Signals an der Oberfläche verhindert oder in vorbestimmter Weise reduziert wird oder das von der Oberfläche emittierte oder reflektierte Signal durch das Medium blockiert oder in vorbestimmter Weise abgeschwächt wird.

In Schritt 2 erfolgt ein Messen des von der lokalen Charakteristik des jeweiligen Bereichs der Oberfläche des Substrats abhängigen Signals, wobei das Signal von der Oberfläche emittiert oder zurückgeworfen (z.B. gestreut oder reflektiert) wird.

In Schritt 3 erfolgt ein Vergleichen des für den jeweiligen Bereich nach einem Aufbringen von Medium durch die Aufbringeinheit gemessenen Signals mit einer Referenz zur Bestimmung der Oberflächengüte.

Als Referenz wird in diesem Fall wahlweise oder parallel eine in Schritt 4 vorgenommene Messung genutzt, die entweder an einem Referenz-Substrat (mit und/oder ohne aufgebrachtes Medium) oder an dem zu untersuchenden Substrat vor dem Aufbringen (Schritt 1) des Mediums vorgenommen wird. Alternativ oder ergänzend zu dieser Nutzung wird beispielsweise die Gesamtheit der am vorliegenden Substrat aufgenommenen Messungen (aus Schritt 2) zur Bestimmung eines Mittelwerts als Referenz genutzt. Anstelle des Mittelwerts kann auch ein Extremwert oder ein gewichtet abgeleiteter Wert genutzt werden.

Der Ablauf kann nach Schritt 2 und/oder Schritt 3 jeweils zu Schritt 1 zurückkehren.

Fig. 3 zeigt eine schematische Darstellung einer erfindungsgemäßen Vorrichtung.

Die Vorrichtung 10 umfasst eine Messeinheit 11 in Form einer OSEE-Einheit, die einen optisch stimulierten Photostrom als ein von einer lokalen Charakteristik eines jeweiligen Bereichs (nämlich der Oberflächenbelegung mit etwa einer Kontamination) einer Oberfläche 12 eines Substrats 13 abhängigen Signal aufnimmt (illustriert mit Doppelpfeil 14).

Die Vorrichtung 10 umfasst ferner einen Ultraschallzerstäuber 15 als ein Beispiel einer Aufbringeinheit zum Aufbringen eines Mediums 16 auf die Oberfläche 12 des Substrats 13.

Das Medium 16, hier Wasser, wird durch den Zerstäuber in Form eines Aerosols auf die Oberfläche 12 aufgebracht, wo sich dann Tropfen 17 (nicht maßstabsgerecht) bilden. An diesen Tropfen 17 wird eine Emission des Photostroms unterbunden.

Dieser Stimulus-Effekt des vorübergehend aufgebrachten Mediums wird mit der Messeinheit 11 erfasst, wenn der Photostrom als ein von einer lokalen Charakteristik eines jeweiligen Bereichs (nämlich der Oberflächenbelegung, mit dem aufgesprühten Medium und in Kombination zusätzlich etwa mit einer Kontamination) der Tropfen-bedeckten Substratoberfläche aufgenommen wird.

Zudem umfasst die Vorrichtung 10 eine Steuereinheit 18 in Form eines Rechners, der unter anderem eine Steuerung der Einheiten 11 und 15 (und damit letztlich der ganzen Vorrichtung 10) ausführt und als eine Vergleichseinheit zum Vergleichen des für den jeweiligen Bereich nach einem Aufbringen von Medium durch die Aufbringeinheit gemessenen Signals mit einer Referenz zur Bestimmung der Oberflächengüte dient.

Beispiele von erfindungsgemäßen Verfahren umfassen eine auf einen Aerosolauftrag folgende OSEE-Messung oder IR-Spektroskopiemessung, eine auf einen Aerosolauftrag folgende Streulicht-basierte Rauheitsmessung und auch eine auf einen Aerosolauftrag folgende OSEE-Messung oder IR-Spektroskopiemessung zeitgleich mit einer auf den Aerosolauftrag folgenden Streulicht-basierten Rauheitsmessung. Die Auswertung der Messergebnisse baut auf einen Algorithmus auf, nach dessen Anwendung eine zweidimensionale Übersicht über regionale Benetzbarkeitsunterschiede resultiert. Hierbei ist es vorteilhafterweise möglich, im Rahmen des Mess- oder Prüfverfahrens auf eine Erfassung von Einzeltropfen zu verzichten.

Vorteilhafte Weiterführungen der obigen Beispiele umfassen eine sukzessive Durchführung einer OSEE-Messung (oder einer IR-Spektroskopiemessung) oder einer Streulicht-basierten Rauheitsmessung und besonders bevorzugt einer OSEE-Messung (oder IR-Spektroskopiemessung) oder einer Streulicht-basierten Rauheitsmessung, gefolgt von einem Aerosolauftrag, und darauf folgend eine OSEE-Messung (oder IR-Spektroskopiemessung) oder eine Streulicht-basierte Rauheitsmessung und besonders eine auf einen Aerosolauftrag folgende OSEE-Messung (oder IR-Spektroskopiemessung) zeitgleich mit einer auf den Aerosolauftrag folgenden Streulicht-basierten Rauheitsmessung.

Eine bevorzugte Einsatzmöglichkeit der Erfindung liegt in einem schnellen Detektionsansatz für einen Aerosol-Benetzungstest. Nach dem Auftrag eines Flüssigkeits-Aerosols auf eine zu untersuchende Analytoberfläche wird im Aerosol-Benetzungstest herkömmlicher Ausführung mittels eines optischen Verfahrens, typisch lichtmikroskopisch, die mit Tropfen bedeckte Analytoberfläche abgebildet. Darauf folgt eine Bildauswertung, die beispielsweise auf einer Einzeltropfendetektion beruht. Die Aufnahme und Auswertung einer Einzelaufnahme dauert typisch etwa eine Sekunde.

Der Einsatz einer OSEE zur Untersuchung einer Aerosol-bedeckten Analytoberfläche ermöglicht eine mindestens doppelt so schnelle Vorgehensweise, zumal kontinuierlich während des Verfahrens der Analytoberfläche relativ zum OSEE-Sensor ein Photostrom gemessen wird. Dieser Photostrom ist bei bekanntem flächenbezogenem Aerosolauftrag direkt repräsentativ für den in der Projektion auf die Analytoberfläche von den Tropfen bedeckten Flächenanteil und ermöglicht über einen schnellen Algorithmus einen Rückschluss auf den lokalen Kontaktwinkel der Flüssigkeitstropfen.

Von einer solch schnellen Detektionsmethode für einen Aerosol- Benetzungstest profitieren insbesondere Produktionsverfahren, bei denen schnell (bis zu mehrere Quadratmeter große) Oberflächenbereiche auf ihre Benetzung hin untersucht werden müssen. Hierzu können mehrere kombinierte Sprüh-OSEE-Kopf-Einheiten parallel betrieben werden.

Anwendungsfelder sind beispielsweise Metallcoil-Fertigungsstraßen, bei denen ein flächendeckender Auftrag von Schutzfilmen (z.B. polymeren Physisorbaten auf Aluminiumlegierungen) untersucht werden soll, oder Untersuchungen der Oberflächengüte von nicht ebenen, dreidimensional geformten, z.B. gekrümmten, Bauteiloberflächenbereichen auf ihre Benetzung hin, wenn bei Einsatz einer lichtmikroskopischen Abbildungseinheit die Fokussierung oder die kontrastbietende Ausleuchtung der Oberflächenstruktur wesentlich zeitaufwendiger wäre

Besonders deutlich wird der Einsatz eines erfindungsgemäßen Untersuchungsverfahrens dann, wenn matte oder strukturierte Oberflächen (z.B. gebürstete Aluminiumoberflächen oder von Peelply-Abreißgewebe befreite Oberflächen kohlefaserverstärkter Kunststoffoberflächen) zu untersuchen sind, auf denen erfahrungsgemäß eine Kontrastierung von Einzeltropfen oder Tropfenmustern mittels lichtmikroskopischer Verfahren eine sehr aufwändige Ausleuchtung der Analytoberfläche erfordert.

Eine weitere Implementierung der Erfindung kann bei der Charakterisierung von Belägen bei OSEE- Oberflächenanalytik genutzt werden.

Werden bei einer herkömmlichen OSEE-Messung in einem Fertigungsprozess lokal oder auf einzelnen Bauteiloberflächen Abweichungen der OSEE-Intensität vom Sollwert festgestellt, kann zum Beispiel eine (gegebenenfalls erneute) Reinigung der solchermaßen auffälligen Bauteile zur Entfernung von Verunreinigungen ein vorgeschriebener Prozessschritt sein. Zudem ist es für die für die Prozessqualität Zuständigen wesentlich, die Quelle der Verunreinigung ausfindig zu machen oder zumindest einzugrenzen, damit die Prozess-Zuverlässigkeit des Produktionsprozesses erhöht werden kann.

Hier kann ein Einsatz von auf einen Auftrag eines Flüssigkeits-Aerosols folgenden OSEE-Messungen in zweierlei Hinsicht zielführend sein, weil so nicht nur die Verunreinigung angezeigt sondern auch als gut oder schlecht mit der Flüssigkeit benetzbar charakterisiert werden kann. So kann ein abgestimmter Reinigungsprozess erfolgen, und es kann zum Beispiel bei Fingerabdrücken zwischen hydrophoben Handcreme- oder Fettablagerungen oder hydrophilen Schweiß-Ablagerungen unterschieden werden.

Eine weitere vorteilhafte Einsatzmöglichkeit besteht in der Rauheits-Kontrasterhöhung bei Oberflächen mit Rauheitsunterschieden.

Werden Rauheitsuntersuchungen zum Beispiel in der Fertigung kohlefaserverstärkter Kunststoffoberflächen mittels Rauheitssensoren auf Basis von Streulichtverfahren untersucht, so können mittels derselben Rauheitssensoren nach Auftrag eines Flüssigkeits-Aerosols neben der lokalen Rauheit als geometrisch-struktureller Größe zusätzlich noch die lokalen Benetzungseigenschaften, die neben der Rauheit auch von der lokalen chemischen Zusammensetzung der Analytoberfläche bestimmt sind, erfasst werden, weil unterschiedliche lokale Benetzungseigenschaften zu unterschiedlich großen Flüssigkeitstropfen auf der Analytoberfläche in unterschiedlicher Flächendichte und mit unterschiedlicher Flankenwinkelverteilung führen.

Ein erfindungsgemäßes Verfahren ermöglicht also, mithilfe nur eines Sensors zwei unterschiedliche und für die Oberflächenqualität von Bauteilen in Adhäsions-basierenden Fertigungsprozessen wesentliche Kenngrößen schnell zu ermitteln.

Merkmale, die hier mit Bezug auf ein erfindungsgemäßes Verfahren beschrieben sind, sind ebenso als für eine erfindungsgemäße Vorrichtung, deren Verwendung und das entsprechende Computerprogrammprodukt relevant zu verstehen. Dies gilt auch jeweils umgekehrt.

**Patentansprüche**

1. Verfahren zur Bestimmung einer Oberflächengüte eines Substrats anhand seiner Benetzbarkeit, mit den Schritten:

   Aufbringen (1) eines Mediums (16, 17) auf eine Oberfläche (12) des Substrats (13), so dass ein jeweiliger Bereich der Oberfläche (12) durch Tropfen des Mediums (16, 17) teilweise bedeckt wird und durch das Medium (16, 17) eine von einer lokalen Charakteristik eines jeweiligen Bereichs der Oberfläche (12) des Substrats (13) abhängigen optisch stimulierte Elektronenemission von der Oberfläche (12) verhindert oder in vorbestimmter Weise reduziert wird oder die optische stimulierte Elektronenemission von der Oberfläche (12) durch das Medium (16, 17) blockiert oder in vorbestimmter Weise abgeschwächt wird,
   Messen (2) der optisch stimulierten Elektronenemission, und
   Vergleichen (3) der für den jeweiligen Bereich nach einem Aufbringen von Medium (16, 17) gemessenen optisch stimulierten Elektronenemission mit einer Referenz zur Bestimmung der Oberflächengüte.

2. Verfahren nach Anspruch 1, wobei die Referenz bestimmt wird durch

   - Messen (21) der von der lokalen Charakteristik des jeweiligen Bereichs der Oberfläche (12) des Substrats (3) abhängigen optisch stimulierten Elektronenemission vor Aufbringen (1) des Mediums (16, 17),
   - Messen (4) der von der lokalen Charakteristik eines jeweiligen Bereichs einer Oberfläche (12) eines Vergleichssubstrats mit vorbestimmter Oberflächengüte abhängigen optisch stimulierten Elektronenemission vor und/oder nach einem entsprechenden Aufbringen eines Mediums (16, 17) auf die Oberfläche (12) des Vergleichssubstrats, und/oder
   - Verknüpfen eines vorbestimmten Teils oder der Gesamtheit der nach dem Aufbringen von Medium (16, 17) gemessenen optisch stimulierten Elektronenemissionen eines vorbestimmten Teils oder der Gesamtheit der zu prüfenden Oberfläche (12) des Substrats (13).

3. Verfahren nach einem der vorstehenden Ansprüche, wobei das Medium (16, 17) eine rückstandsfrei verdampfende Flüssigkeit oder eine Mischung aus mehreren rückstandsfrei verdampfenden Flüssigkeiten ist.

4. Verfahren nach einen der vorstehenden Ansprüche, wobei das Aufbringen (1) des Mediums (16, 17) ein Zerstäuben des Mediums (16, 17) mittels einer Ultraschalldüse umfasst.

5. Verfahren nach einem der vorstehenden Ansprüche, wobei das Aufbringen (1) oder/und Messen (3) mehrfach aufeinanderfolgt.

6. Vorrichtung (10) zur Bestimmung einer Oberflächengüte eines Substrats (13) anhand seiner Benetzbarkeit, mit:

   einer Messeinheit (11) zum Messen einer von einer lokalen Charakteristik eines jeweiligen Bereichs einer Oberfläche (12) des Substrats (13) abhängigen optisch stimulierten Elektronenemission von der Oberfläche (12),
   einer Aufbringeinheit (15) zum Aufbringen eines Mediums (16, 17) auf die Oberfläche (12) des Substrats (13), wobei die Aufbringeinheit (15) für ein Aufbringen in einer Weise ausgestaltet ist, dass der jeweilige Bereich durch Tropfen des Mediums (16, 17) teilweise bedeckt wird und durch das Medium (16, 17) die optisch stimulierte Elektronenemission verhindert oder in vorbestimmter Weise reduziert wird oder die optisch stimulierte Elektronenemission von der Oberfläche (12) durch das Medium (16, 17) blockiert oder in vorbestimmter Weise abgeschwächt wird, und

einer Vergleichseinheit (18) zum Vergleichen der für den jeweiligen Bereich nach einem Aufbringen von Medium (16, 17) durch die Aufbringeinheit gemessenen optisch stimulierten Elektronenemission mit einer Referenz zur Bestimmung der Oberflächengüte.

7. Vorrichtung (10) nach Anspruch 6, wobei die Vorrichtung (10) zur Durchführung eines Verfahrens nach einem der Ansprüche 1 bis 5 ausgestaltet ist.

8. Verwendung einer Vorrichtung (10) nach Anspruch 6 zur Bestimmung einer Oberflächengüte eines Substrats (13).

9. Computerprogrammprodukt mit Computerprogrammmitteln, die eine Vorrichtung (10) nach Anspruch 6 dazu veranlassen, ein Verfahren nach einem der Ansprüche 1 bis 5 auszuführen, wenn die Computerprogrammmittel auf der Vorrichtung (10) nach Anspruch 6 ausgeführt werden.

**Claims**

1. A method of determining a surface quality of a substrate by means of its wettability, having the steps:

   application (1) of a medium (16, 17) to a surface (12) of the substrate (13), so that a respective region of the surface (12) is partially covered by dripping of the medium (16, 17) and an optically stimulated electron emission from the surface (12), dependent on a local characteristic of a respective region of the surface (12) of the substrate (13), is prevented or reduced in a predetermined manner by the medium (16, 17) or the optical[sic] stimulated electron emission from the surface (12) is blocked or weakened in a predetermined manner by the medium (16, 17),
   measurement (2) of the optically stimulated electron emission, and
   comparison (3) of the optically stimulated electron emission measured for the respective region after the application of medium (16, 17) with a reference for determining the surface quality.

2. A method according to claim 1, wherein the reference is determined by

   - measurement (21) of the optically stimulated electron emission, dependent on the local characteristic of the respective region of the surface (12) of the substrate (3), before application (1) of the medium (16, 17),
   - measurement (4) of the optically stimulated electron emission, dependent on the local characteristic of a respective region of a surface (12) of a comparison substrate with predetermined surface quality, before and/or after an appropriate application of a medium (16, 17) to the surface (12) of the comparison substrate, and/or
   - linkage of a predetermined part or of the totality of the optically stimulated electron emissions, measured after the application of medium (16, 17), of a predetermined part or of the totality of the surface (12), of the substrate (13), to be tested.

3. A method according to any one of the preceding claims, wherein the medium (16, 17) is a fluid evaporating in a residue-free manner or a mixture of a plurality of fluids evaporating in a residue-free manner.

4. A method according to any one of the preceding claims, wherein the application (1) of the medium (16, 17) comprises an atomization of the medium (16, 17) by means of an ultrasonic nozzle.

5. A method according to any one of the preceding claims, wherein the application (1) and/or measurement (3) are consecutively repeated.

6. A device (10) for determining a surface quality of a substrate (13) by means of its wettability, having:

   a measuring unit (11) for measurement of an optically stimulated electron emission, dependent on a local characteristic of a respective region of a surface (12) of the substrate (13), from the surface (12),
   an application unit (15) for the application of a medium (16, 17) to the surface (12) of the substrate (3), wherein the application unit (15) is realised for an application in a manner that the respective region is partially covered by dripping of the medium (16, 17) and the optically stimulated electron emission is prevented or reduced in a predetermined manner by the medium (16, 17) or the optically stimulated electron emission from the surface (12) is blocked or weakened in a predetermined manner by the medium (16, 17), and

a comparison unit (18) for comparing the optically stimulated electron emission measured for the respective region after an application of medium (16, 17) by the application unit with a reference for determining the surface quality.

7.  A device (10) according to claim 6, wherein the device (10) for carrying out a method is realised according to any one of claims 1 to 5.

8.  Use of a device (10) according to claim 6 for determining a surface quality of a substrate (13).

9.  A computer program product with computer program means which cause a device (10) according to claim 6 to carry out a method according to any one of claims 1 to 5 when the computer program means are realised on the device (10) according to claim 6.


**Revendications**

1.  Procédé de détermination d'une finition de surface d'un substrat au moyen de sa mouillabilité, avec les étapes :

    d'application (1) d'un milieu (16, 17) sur une surface (12) du substrat (13) de sorte qu'une zone concernée de la surface (12) soit recouverte partiellement par des gouttes du milieu (16, 17) et une émission d'électrons stimulée optiquement dépendant d'une caractéristique locale d'une zone concernée de la surface (12) du substrat (13) soit empêchée ou soit réduite de manière prédéterminée par le milieu (16, 17) ou l'émission d'électrons stimulée optiquement de la surface (12) soit bloquée par le milieu (16, 17) ou soit atténuée de manière prédéterminée,
    de mesure (2) de l'émission d'électrons stimulée optiquement, et
    de comparaison (3) de l'émission d'électrons stimulée optiquement mesurée pour la zone concernée après une application du milieu (16, 17) avec une référence pour la détermination de la finition de surface.

2.  Procédé selon la revendication 1, dans lequel la référence est déterminée par

    - la mesure (21) de l'émission d'électrons stimulée optiquement dépendant de la caractéristique locale de la zone concernée de la surface (12) du substrat (3) avant l'application (1) du milieu (16, 17),
    - la mesure (4) de l'émission d'électrons stimulée optiquement dépendant de la caractéristique locale d'une zone concernée d'une surface (12) d'un substrat comparatif avec une finition de surface prédéterminée avant et/ou après une application correspondante d'un milieu (16, 17) sur la surface (12) du substrat comparatif et/ou
    - la liaison d'une partie prédéterminée ou de l'intégralité des émissions d'électrons stimulées optiquement, mesurées après l'application de milieu (16, 17) d'une partie prédéterminée ou de l'intégralité de la surface (12) à vérifier du substrat (13).

3.  Procédé selon l'une des revendications précédentes, dans lequel le milieu (16, 17) est un liquide s'évaporant sans résidu ou un mélange de plusieurs liquides s'évaporant sans résidu.

4.  Procédé selon l'une des revendications précédentes, dans lequel l'application (1) du milieu (16, 17) comporte une pulvérisation du milieu (16, 17) au moyen d'une buse à ultrasons.

5.  Procédé selon l'une des revendications précédentes, dans lequel l'application (1) et/ou la mesure (3) se succède l'une l'autre à plusieurs reprises.

6.  Dispositif (10) pour la détermination d'une finition de surface d'un substrat (13) au moyen de sa mouillabilité, avec :

    une unité de mesure (11) pour la mesure d'une émission d'électrons stimulée optiquement dépendant d'une caractéristique locale d'une zone concernée d'une surface (12) du substrat (13) de la surface (12),
    une unité d'application (15) pour l'application d'un milieu (16, 17) sur la surface (12) du substrat (13), dans lequel l'unité d'application (15) est configurée pour une application de manière que la zone concernée soit couverte partiellement par des gouttes du milieu (16, 17) et l'émission d'électrons stimulée optiquement soit empêchée ou soit réduite de manière prédéterminée par le milieu (16, 17) ou l'émission d'électrons stimulée optiquement de la surface (12) soit bloquée par le milieu (16, 17) ou atténuée de manière prédéterminée, et une unité comparative (18) pour la comparaison de l'émission d'électrons stimulée optiquement mesurée pour la zone concernée après une application de milieu (16, 17) par l'unité d'application avec une référence pour la détermination de la finition de surface.

7. Dispositif (10) selon la revendication 6, dans lequel le dispositif (10) est configuré pour la réalisation du procédé selon l'une des revendications 1 à 5.

8. Utilisation d'un dispositif (10) selon la revendication 6 pour la détermination d'une finition de surface d'un substrat (13).

9. Produit de programme informatique avec des moyens de programme informatique qui incitent un dispositif (10) selon la revendication 6 à réaliser un procédé selon l'une des revendications 1 à 5 lorsque les moyens de programme informatique sont réalisés sur le dispositif (10) selon la revendication 6.

Fig. 1

Fig. 2

Fig. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5393980 A
- US 6856403 B1
- EP 1893974 B1
- WO 2006131568 A1
- DE 19855957 A1

**In der Beschreibung aufgeführte Nicht-Patentliteratur**

- **ARTIKELN M. ROMAND ; F. GAILLARD ; M. CHARBONNIER ; N. S. PRAKASH ; L. DESHAYES ; I. LINOSSIER.** Adhesion Science and Surface Analysis. Typical Examples. *The Journal of Adhesion,* 1995, vol. 55, 1-2, 1-16
- **TENNYSON SMITH.** Surface Quality Unit For Inspection By□Nondestructive Testing (SQUINT). *National SAMPE TECHNICAL CONFERENCE,* 1983
- Optically stimulated electron emission (OSEE): a non-invasive technique for contamination detection. **SHLANGER, S. ; EPSTEIN, G.** Review of Progress in Quantitative Nondestructive Evaluation. Plenum Press, 15. Juli 1990, vol. 10 A, 589-595
- **E. K. DABORA.** Production of Monodisperse Sprays. *Review of Scientific Instruments,* 1967, vol. 38 (4), 502-506